# FASCICULE DE BREVET EUROPEEN

(11) **EP 3 956 818 B1**
(45) Date de publication et mention de la délivrance du brevet: **05.04.2023**
(21) Numéro de dépôt: 20728532.1
(22) Date de dépôt: 17.04.2020
(51) Int. Cl.: G06K 19/077, G06K 19/07

(54) **MODULE ÉLECTRONIQUE POUR CARTE À PUCE COMPRENANT UN ÉCRAN D'AFFICHAGE**
ELEKTRONISCHES MODUL FÜR CHIPKARTE MIT BILDSCHIRM
ELECTRONIC MODULE FOR CHIP CARD COMPRISING A DISPLAY SCREEN

(30) Priorité: 19.04.2019 FR 1904213
(43) Date de publication de la demande: 23.02.2022
(73) Titulaire: Smart Packaging Solutions, 13790 Rousset (FR)
(72) Inventeur: FABRIZIO, Kevin, 13790 ROUSSET (FR); GERIN, Guillaume, 13790 ROUSSET (FR)
(74) Mandataire: Nicolle, Olivier
(86) Numéro de dépôt international: PCT/FR2020/000140
(87) Numéro de publication internationale: WO 2020/212667

(56) Documents cités:
- EP-A1- 3 168 787
- US-A1- 2009 200 650
- US-A1- 2019 012 588

## Description

La présente invention concerne un module électronique, notamment pour carte à puce, comprenant une puce électronique de carte à puce, et un second composant électronique tel que par exemple un afficheur sur une des faces du module.

### ETAT DE LA TECHNIQUE

Afin d'augmenter la sécurité des cartes à puce dans certaines applications, notamment bancaires, ou pour les transactions sur internet, un certain nombre de cartes à puce comportent, à la place d'un code fixe CV (abréviation du terme anglais « CardholderVerification »), un code dynamique, noté CVX, affiché sur un écran digital sur le dos de la carte à puce.

L'écran d'affichage du code dynamique est disposé au même endroit que le code fixe habituel, c'est-à-dire en décalage par rapport à la position du module électronique de la carte à puce et de son bornier de contacts, ce qui impose, pour que les deux circuits puissent communiquer entre eux, la présence d'un circuit imprimé flexible (noté « PCB flex » en terminologie anglo-saxonne) faisant la liaison électronique entre l'afficheur et le microcontrôleur du module électronique habituel de la carte à puce.

Cette solution est coûteuse à réaliser, et la présence de ce circuit imprimé flexible faisant la liaison entre deux composants électroniques distants expose la carte à puce à des risques de diminution de la fiabilité du produit dans le temps. En outre un produit avec cette architecture serait très difficile à fabriquer en volume avec un rendement industriel acceptable.

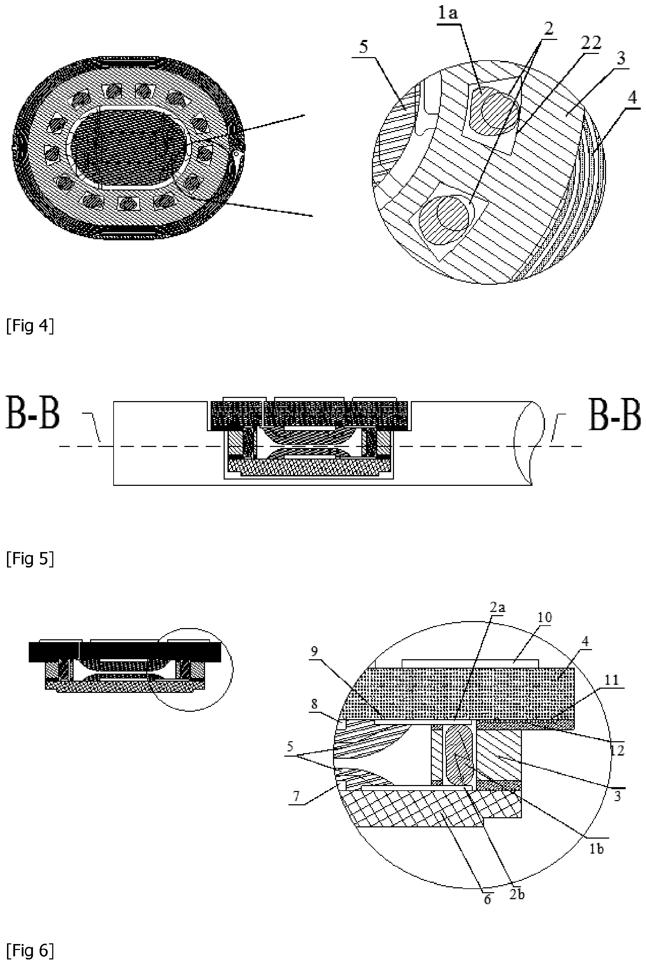

On connaît de par le document EP 3 168 787 A1 le principe d'un module électronique pour carte à puce, pourvu de deux circuits intégrés électroniques en regard, disposés entre une interface à contacts conforme à la norme ISO 7816 apparent sur une première face, et un écran apparent sur la seconde face du module et capable d'afficher un code CVX. Cette disposition de deux circuits empilés permet d'éviter la nécessité d'un circuit PCB flex pour relier les deux circuits. En effet, les deux circuits imprimés, l'interface à contacts ISO et l'écran d'affichage sont reliés entre eux par des interconnexions (références 524, 526, 528, 530 en figure 5 du document). Or les interconnexions représentées sont de pur principe et sont particulièrement difficiles à réaliser d'un point de vue industriel. Elles posent en effet une série de problèmes techniques qui ne sont ni abordés ni solutionnés dans ledit document, comme par exemple la façon d'assurer une épaisseur précise et constante du module malgré l'empilage des circuits intégrés et des interconnexions, et la façon de réaliser des interconnexions fiables et bien positionnées, sachant que les points d'interconnexion ne sont pas visibles de l'extérieur du module.

Ces différents problèmes ne sont pas propres aux cartes à puce au format ISO 7816-1 bien connues, mais ils se poseraient de la même manière à d'autres produits ayant des composants et des fonctionnalités similaires mais présentant un facteur de forme différent, comme par exemple les cartes d'identité ou passeports électroniques, ou équivalent. L'invention sera donc décrite dans le cadre d'une carte à puce à titre de simplification, sans que ce facteur de forme ne soit limitatif.

### BUT DE L'INVENTION

L'invention a pour but général de proposer un module électronique et une carte à puce utilisant un tel module, apte à pallier les inconvénients de l'état de la technique.

Un but plus spécifique de l'invention est de proposer un module électronique de carte à puce comportant sur sa face arrière un second composant électronique, notamment un capteur biométrique, ou un écran, en particulier pour l'affichage d'un code CVX, sans nécessiter de circuit imprimé entre le module de carte à puce et le second composant électronique.

Un autre but de l'invention est de proposer un module électronique pour carte à puce qui soit aisément utilisable pour tout type de carte à puce, qu'il s'agisse d'une carte à puce à contact directement pourvue sur sa face avant d'un bornier de contacts, ou d'une carte à puce uniquement à fonctionnement sans contact, ou encore d'une carte à puce à fonctionnement mixte à contact et sans contact.

Un autre but de l'invention est de proposer un module électronique pour carte à puce dont la fabrication ne diffère pas d'un module contact, sans contact ou à double interface de communication à contact et sans contact, c'est-à-dire qu'il peut être fabriqué en utilisant les mêmes lignes de production que ces derniers.

Un autre but de l'invention est de proposer une structure de module pour carte à puce permettant de réaliser de façon simple et fiable les interconnexions électriques entre deux circuits imprimés superposés et surmontés l'un par une interface à contacts et l'autre par un capteur ou un écran.

### OBJET DE L'INVENTION

L'invention a donc pour objet un module électronique pour carte à puce , le module comportant au moins un premier substrat diélectrique pourvu sur une de ses faces d'au moins une première puce microélectronique dont les bornes d'entrée/sortie sont connectées à des premiers plots de connexion disposés autour de ladite première puce microélectronique, et au moins un second substrat diélectrique placé directement en regard du premier substrat et pourvu sur une de ses faces d'au moins une seconde puce microélectronique dont les bornes d'entrée/sortie sont connectées à des seconds plots de connexion disposés autour de ladite seconde puce microélectronique, les première et seconde puces microélectroniques étant disposées sur les faces des substrats tournées vers l'intérieur du module électronique, caractérisé en ce que le module comporte une entretoise diélectrique d'épaisseur calibrée séparant les premier et second substrats diéléctriques, ladite entretoise comportant soit des orifices traversants débouchant de part et d'autre sur la face interne desdits substrats et dans lesquels sont disposés des matériaux électriquement conducteurs aptes à connecter certains des premiers plots de connexion à certains des seconds plots de connexion, soit des vias conducteurs dont les extrémités sont connectées aux premiers et seconds plots de connexion électrique au moyen d'un adhésif conducteur anisotropique qui conduit électriquement uniquement dans une direction perpendiculaire aux substrats.

Selon un mode de réalisation, l'entretoise possède autant d'orifices que d'interconnexions à réaliser entre les première et seconde puces électroniques, chacun de ces orifices ayant une section transversale au moins égale à la section des plots de connexion et étant rempli par une pastille de matériau conducteur.

Selon un mode de réalisation, ledit matériau conducteur est une résine conductrice, une encre conductrice, un fluide conducteur, une graisse ou colle conductrice.

Avantageusement, ledit matériau conducteur est une résine ou colle qui se solidifie sous l'effet d'une application de chaleur ou de rayons ultraviolets.

Selon une variante de réalisation, l'entretoise possède des orifices en forme d'arc dont la section transversale est supérieure à la section de plusieurs plots de connexion voisins, lesdits orifices étant remplis par une résine ou une colle ferromagnétique anisotropique apte à réaliser sous l'effet d'un champ magnétique plusieurs connexions électriques parallèles selon un axe (Z) perpendiculaire aux substrats diélectriques. Dans ce mode de réalisation, les connexions électriques peuvent ne devenir définitives qu'après l'application d'un champ magnétique et d'une température prédéfinis. En variante, lesdites connexions électriques peuvent être temporaires et ne durer que tant qu'un champ magnétique est appliqué.

Quelles que soient les modes de réalisation de l'entretoise et des connexions électriques entre les puces, ledit premier substrat diélectrique peut comporter sur sa face externe tournée vers l'extérieur du module un bornier de contacts, en particulier selon la norme ISO 7816, reliés aux premiers plots de connexion par des pistes conductrices intégrées au premier substrat. Et ledit premier substrat diélectrique comporte sur sa face interne tournée vers l'intérieur du module une antenne dont les extrémités sont connectées aux plots de connexion d'une interface radiofréquence de la première puce microélectronique.

Selon un mode de réalisation, ledit second substrat comporte sur sa face externe un écran d'affichage et ladite seconde puce microélectronique est un contrôleur apte à piloter ledit écran d'affichage.

Selon une variante de réalisation, ledit second substrat comporte un capteur, en particulier un capteur biométrique, et ladite seconde puce microélectronique est un contrôleur apte à piloter ledit capteur.

L'invention a également pour objet une carte à puce, caractérisée en ce qu'elle comporte un corps de carte pourvu d'une cavité traversante, et un module électronique tel que décrit plus haut, fixé dans ladite cavité de façon à présenter sur une des faces de la carte à puce une face du premier substrat et sur l'autre face de la carte à puce, une face du second substrat du module.

Selon une variante, la carte à puce comporte un corps de carte pourvu d'une cavité borgne présentant un fond transparent, et un module électronique tel que décrit plus haut, fixé dans ladite cavité de façon à présenter sur une des faces de la carte à puce une face du premier substrat et sur l'autre face de la carte à puce, une face du second substrat visible à travers le fond transparent.

### DESCRIPTION DETAILLEE

L'invention sera décrite plus en détail en référence aux figures ci-jointes dans lesquelles :
La figure 1 représente une vue en coupe agrandie d'un premier mode de réalisation du module électronique selon l'invention ;
La figure 2 représente une vue agrandie de l'extrémité droite du module électronique de la figure 1 ;
La partie gauche de la figure 3 représente une vue en plan et en coupe du module selon un plan de coupe A-A de la figure 1 La partie droite de la figure 3représente une vue agrandie d'une partie de la partie gauche de la figure 3 ;
Les figures 4 à 6 sont des vues similaires aux figures 1 à 3, mais concernent un second mode de réalisation du module avec une entretoise légèrement modifiée.
La figure 7 représente une vue de la répartition des particules électriques à l'intérieur d'une colle conductrice anisotropique à différents stades de cuisson ;
La figure 8 représente une vue en coupe agrandie d'un troisième mode de réalisation du module électronique selon l'invention ;
La figure 9 représente une vue agrandie d'une zone de la figure 8 correspondant à la connexion par adhésif conducteur anisotropique ;
La figure 10 représente une vue en coupe d'une carte à puce utilisant un module électronique conforme à l'invention.

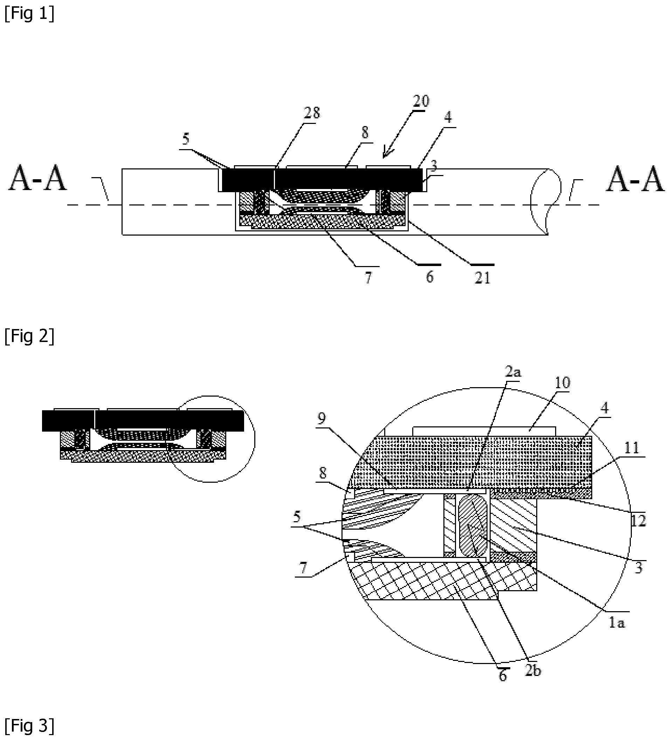

On se réfère aux figures 1 à 3 qui concernent un premier mode de réalisation de l'invention. Un module 20 pour carte à puce est inséré dans une cavité 21 d'un corps de carte, ou dans un support équivalent avec un facteur de forme différent des corps de cartes normalisés selon la norme ISO 7816. Le module 20 comporte un premier substrat diélectrique 4 sur une face du module, typiquement la face dite supérieure, et un second substrat diélectrique 6 disposé sur l'autre face du module, typiquement la face inférieure. Sur la face du premier substrat 4 orientée vers l'intérieur du module est fixée une première puce microélectronique 8, du type des puces de cartes à puce bien connues. De la même manière, sur la face du second substrat 6 orientée vers l'intérieur du module est fixée une seconde puce microélectronique 7. Les deux puces 7,8 sont enrobées et protégées par une résine d'enrobage 5.

Dans l'exemple représenté, la première puce 8 est une puce à fonctionnement dual en modes à contact et sans contact. De ce fait elle comporte certaines bornes d'entrée/sortie 9 connectées à un bornier de contacts 10 par l'intermédiaire de pistes conductrices ou via 28 traversant le premier substrat 4, et certaines bornes d'entrée/sortie 9 connectées aux extrémités d'une antenne 11 disposée sur la face interne du substrat 4.

Afin de séparer les deux puces 7, 8 l'une de l'autre, le module 20 comporte une entretoise 3 intercalée entre les deux substrats 4, 6. Les faces internes des deux substrats sont collées sur l'entretoise au moyen d'une couche de colle 12, typiquement une colle dite « hotmelt » en terminologie anglo-saxonne.

L'entretoise 3 comporte des orifices traversants 22 qui débouchent de part et d'autre sur la face interne des deux substrats 4, 6. A ces endroits, le premier substrat 4 comporte sur sa face interne des premiers plots de connexion 2a qui sont connectés à des bornes d'entrée/sortie 9 de la première puce 8, par des connexions électriques. De façon similaire, le second substrat 6 comporte sur sa face interne des seconds plots de connexion 2b qui sont connectés à des bornes d'entrée/sortie 9 de la seconde puce 7, par des connexions électriques.

Selon l'invention, les plots de connexion respectifs 2a, 2b des deux substrats 4, 6 sont situés en vis-à-vis, ce qui permet de les connecter deux à deux par l'intermédiaire de pastilles 1a en matériau conducteur dispensées dans les orifices 22 de l'entretoise 3 avant l'assemblage du module, comme bien visible sur les figures 2 et 3A, 3B. Il est à noter que la section des orifices traversants est légèrement supérieure à la taille des plots de connexion 2a, 2b et à la section des pastilles 1a en matériau conducteur, ce qui permet à coup sûr de positionner les pastilles en matériau conducteur bien en face des plots de connexion, malgré les tolérances de position dues aux tolérances de fabrication.

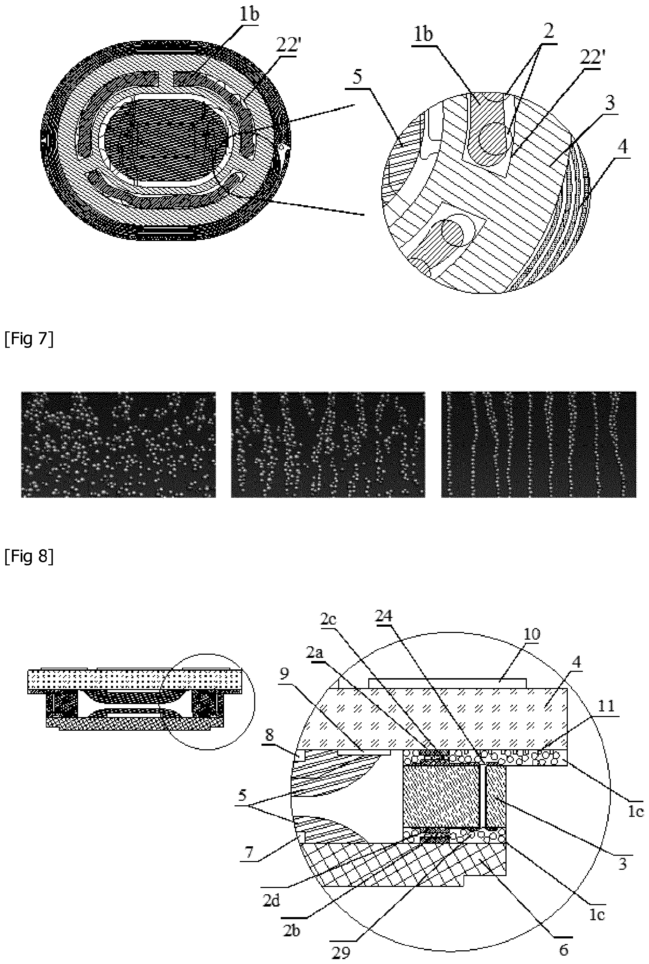

Dans un second mode de réalisation correspondant aux figures 4 à 7, la forme de l'entretoise 3 a légèrement changé, les orifices 22 étant remplacés par trois secteurs traversants 22', et les pastilles conductrices 1 acylindriques étant remplacées par des pastilles conductrices 1b en forme d'arc disposées en face de plusieurs plots de connexion 2a, 2b. Dans ce cas, la section transversale des orifices de l'entretoise et la surface des pastilles conductrices 1b englobent la section de plusieurs plots de connexion 2a, 2b, ce qui simplifie la fabrication du module. Mais en l'absence d'une précaution complémentaire, cela mettrait plusieurs plots de connexion en court-circuit. Pour éviter un court-circuit entre des plots voisins, on utilise alors pour les pastilles conductrices 1b une colle conductrice ferromagnétique, qui devient progressivement conductrice dans une direction dirigée entre les plots 2a, 2b perpendiculairement au plan des substrats, à partir du moment où un champ magnétique et une température de réticulation appropriés sont appliqués, comme schématisé dans la figure 7. L'évolution de la colle ferromagnétique est représentée de la gauche vers la droite de la figure 7, et la colle conductrice ferromagnétique devient définitivement conductrice à la fin de l'application du champ magnétique et de la température de réticulation. De cette manière, un couple de plots 2a, 2b donné est électriquement relié, mais les plots 2a (respectivement 2b) voisins ne sont pas mis en court-circuit.

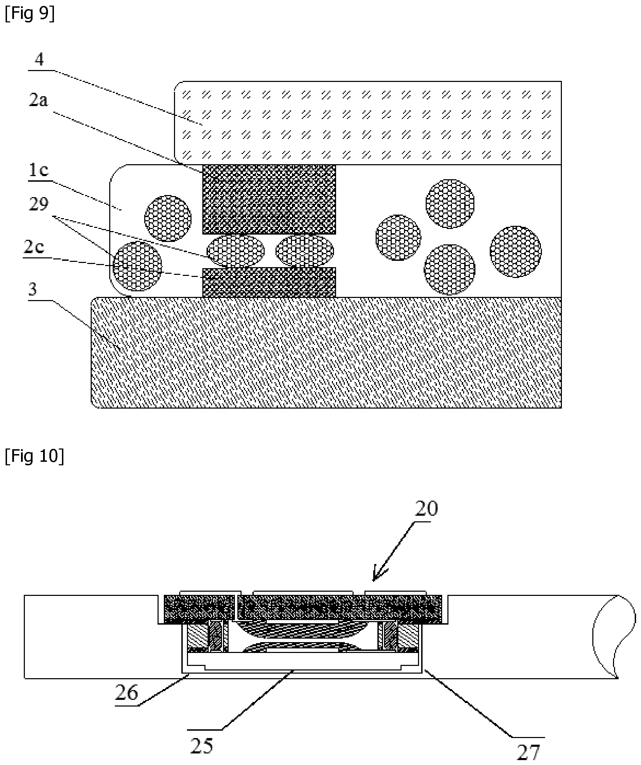

Dans le troisième mode de réalisation correspondant aux figures 8 et 9, l'entretoise 3 comporte des vias conducteurs 24 dont les extrémités sont connectées à des premiers et seconds plots de connexion électriques 2c, 2d au moyen d'un adhésif conducteur anisotropique 1c qui conduit le courant uniquement dans une direction perpendiculaire aux substrats. Pour réaliser cela, le matériau conducteur 1c comporte des particules conductrices qui sont dispersées de façon aléatoire dans un premier temps, mais qui s'alignent dans une direction perpendiculaire au plan des deux substrats pendant une phase de cuisson de quelques secondes, comme schématisé en figure 9. Plus précisément, lorsque l'on vient appliquer une pression et une température, l'épaisseur de l'adhésif 1c flue afin de révéler en surface les particules conductrices assurant ainsi une connexion uniquement sur l'axe vertical Z, les particules conductrices traversant complètement l'adhésif après application des paramètres de pression et température. A l'issue de ce traitement, le matériau conducteur 1c présente des lignes conductrices définitives reliant deux à deux les plots de connexion 2a et 2c, ainsi que 2b et 2d de part et d'autre de l'entretoise 3.

### AVANTAGES DE L'INVENTION

L'invention répond aux buts fixés et en particulier permet d'obtenir un module pour carte à puce pourvu de deux composants électroniques situés en vis-à-vis sur deux substrats, dont un en partie inférieure du module qui est logé au voisinage de fond de la cavité de la carte à puce.

L'entretoise calibrée disposée entre les deux substrats permet tout à la fois de contrôler l'épaisseur du module et d'offrir des orifices ou vias pour le passage des connexions électriques entre les deux composants électroniques. Cette disposition permet, sans utiliser de circuit imprimé de liaison, d'enrichir substantiellement les fonctionnalités du module tout en réutilisant les procédés de fabrication connus de cartes à puce par encartage d'un module dans une cavité d'un corps de carte, qui sont particulièrement maîtrisés et peu coûteux.

En outre il est possible d'alimenter électriquement la seconde puce électronique 7 à partir du circuit d'alimentation de la première puce 8, ce qui permet de supprimer le recours à une batterie pour alimenter la seconde puce.

Le nouveau module selon l'invention reste compatible aussi bien avec les technologies de couplage inductif c'est-à-dire utilisant une puce sans contact couplée électromagnétiquement avec une antenne de grande taille disposée dans le corps de carte, qu'avec les technologies dites filaires dans lesquelles la puce de la carte à puce est reliée par une liaison galvanique à une antenne de grande taille disposée dans le corps de carte.

Par ailleurs, le second composant électronique 7 peut être très diversifié (capteurs, écran, etc...) ce qui permet d'utiliser ce nouveau module pour une très grande variété de cas d'usage.

## Revendications

1. Module électronique (20) pour carte à puce, le module comportant au moins un premier substrat diélectrique (4) pourvu sur une de ses faces d'au moins une première puce microélectronique (8) dont les bornes d'entrée/sortie (9) sont connectées à des premiers plots de connexion (2a) disposés autour de ladite première puce microélectronique (8), et au moins un second substrat diélectrique (6) placé directement en regard du premier substrat (4) et pourvu sur une de ses faces d'au moins une seconde puce microélectronique (7) dont les bornes d'entrée/sortie sont connectées à des seconds plots de connexion (2b) disposés autour de ladite seconde puce microélectronique (7), les première et seconde puces microélectroniques (7, 8) étant disposées sur les faces des substrats (6,4) tournées vers l'intérieur du module électronique, **caractérisé en ce que** le module comporte une entretoise diélectrique (3) d'épaisseur calibrée séparant les premier et second substrats diéléctriques (4,6), ladite entretoise (3) comportant soit des orifices traversants (22, 22') débouchant de part et d'autre sur la face interne desdits substrats (6,4) et dans lesquels sont disposés des matériaux électriquement conducteurs (1a, 1b) aptes à connecter certains des premiers plots de connexion (2a) à certains des seconds plots de connexion (2b) , soit des vias conducteurs (24) dont les extrémités sont connectées aux premiers et seconds plots de connexion électrique (2a, 2b) au moyen d'un adhésif conducteur anisotropique (1c) qui conduit électriquement uniquement dans une direction perpendiculaire aux substrats (4, 6).

2. Module électronique (20) selon la revendication 1, **caractérisé en ce que** l'entretoise (3) possède autant d'orifices (22) que d'interconnexions à réaliser entre les première et seconde puces électroniques (8, 7), chacun de ces orifices ayant une section transversale au moins égale à la section des plots de connexion (2a, 2b) et étant rempli par une pastille (1b) de matériau conducteur.

3. Module électronique (20) selon l'une quelconque des revendications précédentes, **caractérisé en ce que** ledit matériau conducteur est une résine conductrice, une encre conductrice, un fluide conducteur, une graisse ou colle conductrice.

4. Module électronique (20) selon l'une quelconque des revendications précédentes, **caractérisé en ce que** ledit matériau conducteur est une résine ou colle qui se solidifie sous l'effet d'une application de chaleur ou de rayons ultraviolets.

5. Module électronique (20) selon la revendication 1, **caractérisé en ce que** l'entretoise (3) possède des orifices (22') en forme d'arc dont la section transversale est supérieure à la section de plusieurs plots de connexion (2a, 2b) voisins, lesdits orifices (22') étant remplis par une résine ou une colle ferromagnétique anisotropique apte à réaliser sous l'effet d'un champ magnétique plusieurs connexions électriques parallèles selon un axe (Z) perpendiculaire aux substrats diélectriques (4, 6).

6. Module électronique (20) selon la revendication 5, **caractérisé en ce que** les connexions électriques deviennent définitives après l'application d'un champ magnétique et d'une température prédéfinis.

7. Module électronique (20) selon la revendication 5, **caractérisé en ce que** lesdites connexions électriques sont temporaires et ne durent que tant qu'un champ magnétique est appliqué.

8. Module électronique (20) selon l'une des revendications précédentes, **caractérisé en ce que** ledit premier substrat diélectrique (4) comporte sur sa face externe tournée vers l'extérieur du module un bornier de contacts (10), en particulier selon la norme ISO 7816, reliés aux premiers plots de connexion (2a) par des pistes conductrices intégrées au premier substrat.

9. Module électronique (20) selon l'une quelconque des revendications précédentes, **caractérisé en ce que** ledit premier substrat diélectrique (4) comporte sur sa face interne tournée vers l'intérieur du module une antenne (11) dont les extrémités sont connectées aux plots de connexion d'une interface radiofréquence de la première puce microélectronique (8).

10. Module électronique (20) selon l'une quelconque des revendications précédentes, **caractérisé en ce que** ledit second substrat (6) comporte sur sa face externe un écran d'affichage (25) et **en ce que** ladite seconde puce microélectronique (7) est un contrôleur apte à piloter ledit écran d'affichage.

11. Module électronique (20) selon l'une quelconque des revendications précédentes, **caractérisé en ce que** ledit second substrat (6) comporte un capteur, en particulier un capteur biométrique, et **en ce que** ladite seconde puce microélectronique (7) est un contrôleur apte à piloter ledit capteur.

12. Carte à puce, **caractérisée en ce qu'**elle comporte un corps de carte pourvu d'une cavité traversante, et un module électronique (20) selon l'une quelconque des revendications précédentes, fixé dans ladite cavité de façon à présenter sur une des faces de la carte à puce une face du premier substrat (4) et sur l'autre face de la carte à puce, une face du second substrat (6).

13. Carte à puce, **caractérisée en ce qu'**elle comporte un corps de carte pourvu d'une cavité borgne (27) présentant un fond transparent (26), et un module électronique (20) selon l'une quelconque des revendications précédentes, fixé dans ladite cavité de façon à présenter sur une des faces de la carte à puce une face du premier substrat (4) et sur l'autre face de la carte à puce, une face du second substrat (6) visible à travers le fond transparent (26).

## Patentansprüche

1. Elektronisches Modul (20) für eine Chipkarte, wobei das Modul mindestens ein
erstes dielektrisches Substrat (4) umfasst, das auf einer seiner Seiten mit mindestens einem ersten mikroelektronischen Chip (8) versehen ist, dessen Eingangs-/Ausgangsanschlüsse (9) mit ersten um den ersten mikroelektronischen Chip (8) herum angeordneten Anschlussflächen (2a) verbunden sind, und mindestens ein zweites dielektrisches Substrat (6), das direkt gegenüber dem ersten Substrat (4) angeordnet und an einer seiner Seiten mit mindestens einem zweiten mikroelektronischen Chip (7) versehen ist, dessen Eingangs-/Ausgangsanschlüsse mit zweiten, um den zweiten mikroelektronischen Chip (7) herum angeordneten Verbindungsanschlüssen (2b) verbunden sind, wobei der erste und der zweite mikroelektronische Chip (7, 8) an den Seiten der Substrate (6, 4) angeordnet sind, die zum Inneren des elektronischen Moduls hin gerichtet sind, **dadurch gekennzeichnet, dass** das Modul einen dielektrischen Abstandshalter (3) mit kalibrierter Stärke umfasst, der das erste und das zweite dielektrische Substrat (4, 6) voneinander trennt, wobei der Abstandshalter (3) entweder Durchgangsöffnungen (22, 22') umfasst, die zu beiden Seiten in die Innenseite der Substrate (6, 4) münden und in denen elektrisch leitende Materialien (la, lb) angeordnet sind, die geeignet sind, einige der ersten Anschlussflächen (2a) mit einigen der zweiten Anschlussflächen (2b) zu verbinden, oder leitfähige Durchkontaktierungen (24), deren Enden mit den ersten und zweiten elektrischen Anschlussflächen (2a, 2b) mittels eines anisotrop leitfähigen Klebstoffs (lc) verbunden sind, der nur in einer Richtung senkrecht zu den Substraten (4, 6) elektrisch leitet.

2. Elektronisches Modul (20) nach Anspruch 1, **dadurch gekennzeichnet, dass** der Abstandshalter (3) so viele Öffnungen (22) wie zwischen dem ersten und dem zweiten Mikrochip (8, 7) herzustellende Verbindungen besitzt, wobei jede dieser Öffnungen einen Querschnitt hat, der mindestens gleich dem Querschnitt der Anschlussflächen (2a, 2b) ist, und mit einem Pad (lb) aus leitendem Material gefüllt ist.

3. Elektronisches Modul (20) nach einem der vorhergehenden Ansprüche, **dadurch gekennzeichnet, dass** das leitfähige Material ein leitfähiges Harz, eine leitfähige Tinte, ein leitfähiges Fluid, ein leitfähiges Fett oder ein leitfähiger Klebstoff ist.

4. Elektronisches Modul (20) nach einem der vorhergehenden Ansprüche, **dadurch gekennzeichnet, dass** das leitende Material ein Harz oder Klebstoff ist, der sich unter Einwirkung von Wärme oder ultravioletten Strahlen verfestigt.

5. Elektronisches Modul (20) nach Anspruch 1, **dadurch gekennzeichnet, dass** der Abstandshalter (3) bogenförmige Öffnungen (22') besitzt, deren Querschnitt größer ist als der Querschnitt mehrerer benachbarter Anschlussflächen (2a, 2b), wobei die Öffnungen (22') mit einem anisotropen ferromagnetischen Harz oder Klebstoff gefüllt sind, der geeignet ist, unter Einwirkung eines Magnetfelds mehrere parallele elektrische Verbindungen entlang einer Achse (Z) senkrecht zu den dielektrischen Substraten (4, 6) herzustellen.

6. Elektronisches Modul (20) nach Anspruch 5, **dadurch gekennzeichnet, dass** die elektrischen Verbindungen nach dem Anlegen eines vordefinierten Magnetfelds und einer vordefinierten Temperatur endgültig werden.

7. Elektronisches Modul (20) nach Anspruch 5, **dadurch gekennzeichnet, dass** die elektrischen Verbindungen temporär sind und nur so lange bestehen, wie ein Magnetfeld angelegt ist.

8. Elektronisches Modul (20) nach einem der vorhergehenden Ansprüche, **dadurch gekennzeichnet, dass** das erste dielektrische Substrat (4) auf seiner zur Außenseite des Moduls hin gerichteten Außenseite eine Klemmenleiste mit Kontakten (10), insbesondere gemäß der Norm ISO 7816, umfasst, die über in das erste Substrat integrierte Leiterbahnen mit den ersten Anschlussflächen (2a) verbunden sind.

9. Elektronisches Modul (20) nach einem der vorhergehenden Ansprüche, **dadurch gekennzeichnet, dass** das erste dielektrische Substrat (4) auf seiner zur Innenseite des Moduls hin gerichteten Innenseite eine Antenne (11) umfasst, deren Enden mit den Anschlussflächen einer Radiofrequenzschnittstelle des ersten mikroelektronischen Chips (8) verbunden sind.

10. Elektronisches Modul (20) nach einem der vorhergehenden Ansprüche, **dadurch gekennzeichnet, dass** das zweite Substrat (6) an seiner Außenseite eine Anzeige (25) umfasst und der zweite mikroelektronische Chip (7) ein Controller zum Steuern der Anzeige ist.

11. Elektronisches Modul (20) nach einem der vorhergehenden Ansprüche, **dadurch gekennzeichnet, dass** das zweite Substrat (6) einen Sensor, insbesondere einen biometrischen Sensor, umfasst, und der zweite mikroelektronische Chip (7) ein Controller zum Steuern des Sensors ist.

12. Chipkarte, **dadurch gekennzeichnet, dass** sie einen Kartenkörper umfasst, der mit einem durchgehenden Hohlraum versehen ist, und ein elektronisches Modul (20) nach einem der vorhergehenden Ansprüche, das in dem Hohlraum so befestigt ist, dass sich auf einer Seite der Chipkarte eine Seite des ersten Substrats (4) und auf der anderen Seite der Chipkarte eine Seite des zweiten Substrats (6) befindet.

13. Chipkarte, **dadurch gekennzeichnet, dass** sie einen Kartenkörper umfasst, der mit einem Blindhohlraum (27) mit transparentem Boden (26) versehen ist, und ein elektronisches Modul (20) nach einem der vorhergehenden Ansprüche, das in dem Hohlraum so befestigt ist, dass sich auf einer der Seiten der Chipkarte eine Seite des ersten Substrats (4) und auf der anderen Seite der Chipkarte eine Seite des zweiten, durch den transparenten Boden (26) hindurch sichtbaren Substrats (6) befindet.

## Claims

1. Electronic module (20) for a chip card, wherein the module comprises at least one
first dielectric substrate (4) provided on one of its faces with at least one first microelectronic chip (8) the input/output terminals (9) of which are connected to first connection pads (2a) arranged around said first microelectronic chip (8) and at least one second dielectric substrate (6) positioned directly opposite the first substrate (4) and provided on one of its faces with at least one second microelectronic chip (7), the input/output terminals of which are connected to second connection pads (2b) arranged around the said second microelectronic chip (7), the first and second microelectronic chips (7, 8) being arranged on the faces of the substrates (6, 4) turned towards the interior of the electronic module, **characterised in that** the module comprises a dielectric spacer (3) of calibrated thickness separating the first and second dielectric substrates (4, 6), said spacer (3) comprising either through holes (22, 22') opening on either side on the inner face of said substrates (6, 4) and in which electrically conductive materials (1a, lb) are arranged, capable of connecting some of the first connection pads (2a) to some of the second connection pads (2b), or conductive vias (24), the ends of which are connected to the first and second electrical connection pads (2a, 2b) by means of an anisotropic conductive adhesive (1e) which conducts electrically only in a direction perpendicular to the substrates (4, 6).

2. Electronic module (20) according to claim 1, **characterised in that** the spacer (3) has as many orifices (22) as there are interconnections to be established between the first and second electronic chips (8, 7), each of these orifices having a cross-section at least equal to the cross-section of the connection pads (2a, 2b) and being filled with a chip (lb) of conductive material.

3. Electronic module (20) according to any one of the preceding claims, **characterised in that** said conductive material is a conductive resin, a conductive ink, a conductive fluid, a conductive grease or adhesive.

4. Electronic module (20) according to any one of the preceding claims, **characterised in that** said conductive material is a resin or adhesive that solidifies upon application of heat or ultraviolet light.

5. Electronic module (20) according to claim 1, **characterised in that** the spacer (3) has arc-shaped orifices (22') the cross-section of which is greater than the cross-section of several adjacent connection pads (2a, 2b), the said orifices (22') being filled with an anisotropic ferromagnetic resin or adhesive, capable of producing, under the effect of a magnetic field, several parallel electrical connections along an axis (Z) perpendicular to the dielectric substrates (4, 6).

6. Electronic module (20) according to claim 5, **characterised in that** the electrical connections become final after the application of a predefined magnetic field and temperature.

7. Electronic (20) according to claim 5, **characterised in that** said electrical connections are temporary and only last as long as a magnetic field is applied.

8. Electronic module (20) according to one of the preceding claims, **characterised in that** said first dielectric substrate (4) comprises, on its outer face turned towards the exterior of the module, a terminal block of contacts (10), in particular according to ISO 7816 standard, connected to the first connection pads (2a) by conductive tracks integrated into the first substrate.

9. Electronic module (20) according to any one of the preceding claims, **characterised in that** said first dielectric substrate (4) comprises on its inner face turned towards the interior of the module an antenna (11), the ends of which are connected to the connection pads of a radio frequency interface of the first microelectronic chip (8).

10. Electronic module (20) according to any of the preceding claims, **characterised in that** said second substrate (6) comprises on its outer face a display screen (25) and **in that** said second microelectronic chip (7) is a controller capable of controlling said display screen.

11. Electronic module (20) according to any of the preceding claims, **characterised in that** said second substrate (6) comprises a sensor, in particular a biometric sensor, and **in that** said second microelectronic chip (7) is a controller capable of controlling said sensor.

12. Chip card, **characterised in that** it comprises a card body provided with a through cavity, and an electronic module (20) according to any one of the preceding claims, fixed in said cavity so as to present on one of the faces of the chip card a face of the first substrate (4) and on the other face of the chip card, a face of the second substrate (6) .

13. Chip card, **characterised in that** it comprises a card body provided with a blind cavity (27) having a transparent base (26), and an electronic module (20) according to any one of the preceding claims, fixed in said cavity so as to present on one of the faces of the chip card a face of the first substrate (4) and on the other face of the chip card, a face of the second substrate (6) visible through the transparent base (26).
